Europäisches Patentamt

European Patent Office

Office européen des brevets

(19)

(11) Numéro de publication : **0 320 333 B1**

(12) **FASCICULE DE BREVET EUROPEEN**

(45) Date de publication du fascicule du brevet :
**15.07.92 Bulletin 92/29**

(51) Int. Cl.⁵ : **B62D 1/10,** F16D 1/12

(21) Numéro de dépôt : **88402974.5**

(22) Date de dépôt : **25.11.88**

(54) **Dispositif pour assurer le réglage fin du calage de l'orientation angulaire d'un volant sur un arbre de direction d'automobile.**

(30) Priorité : **09.12.87 FR 8717156**

(43) Date de publication de la demande :
**14.06.89 Bulletin 89/24**

(45) Mention de la délivrance du brevet :
**15.07.92 Bulletin 92/29**

(84) Etats contractants désignés :
**DE ES GB IT SE**

(56) Documents cités :
**EP-A- 0 148 794**
**EP-A- 0 233 813**
**DE-A- 3 400 609**
**FR-A- 2 527 156**
**FR-A- 2 592 925**
**GB-A- 2 055 451**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Cochard, Jean-Pierre**
**8 rue Ampère**
**F-78420 Carrières Sur Seine (FR)**

(74) Mandataire : **Mestre, Jean et al**
**c/o CABINET LAVOIX 2, place d'Estienne d'Orves**
**F-75441 Paris Cédex 09 (FR)**

EP 0 320 333 B1

Jouve, 18, rue Saint-Denis, 75001 PARIS

## Description

La présente invention concerne le réglage de la position angulaire d'un volant sur un arbre d'une colonne de direction de véhicule automobile et, plus particulièrement, a pour objet un dispositif pour le réglage fin du calage de l'orientation angulaire relative de l'arbre d'une colonne de direction et d'un volant d'automobile qui sont réunis par des moyens de fixation du type à vis et écrou.

Comme il est courant, un volant d'automobile comprend un cercle et un moyeu qui sont réunis de manière classique par une ou plusieurs branches radiales

Le moyeu est, le plus souvent, métallique et noyé dans une structure habituellement en matière plastique, s'il y a lieu équipée de renforts.

Le calage de l'orientation du volant sur une extrémité libre d'un arbre d'une colonne de direction est, en général, obtenu a l'aide d'une liaison à encastrement faite de cannelures creusées dans la colonne de direction et dans lesquelles s'emboîtent des cannelures correspondantes complémentaires du moyeu.

La transmission du couple du volant à l'arbre est généralement obtenue par un assemblage conique qui comprend une portée conique femelle du moyeu et une portée conique mâle sur l'arbre.

Le montage axial du volant sur l'arbre de la colonne de direction est assuré par des moyens de fixation a vis et écrou, par exemple un écrou indesserable qui est vissé sur l'embout fileté de l'arbre de la colonne de direction et qui prend appui sur une rondelle interposée entre cet écrou et le moyeu.

La pose du volant sur la colonne de direction est faite après les différents réglages du train avant du véhicule. Ces réglages ont lieu après la mise en place de la barre de direction et de la colonne de direction qui lui est associée. Ceci se répercute sur la colonne de direction et l'arbre de cette dernière tourne plus ou moins suivant son axe.

On conçoit alors que les cannelures que porte l'arbre de la colonne de direction, dans la majorité des cas, n'occupent pas une position angulaire qui permette la pose du volant avec une orientation telle que les branches de celui-ci aient une position rigoureuse imposée par l'esthétique et autorisant une conduite agréable avec de plus une bonne visibilité des appareils du tableau de bord au travers de ce volant.

En outre, des opérations ultérieures de réglage de la direction après mise en place du volant, au cours d'interventions d'entretien ou de réparation peuvent décaler l'orientation de celui-ci par rapport au calage initial.

Ce calage initial est relativement grossier et fonction du pas des cannelures.

Afin de remédier partiellement à ces inconvénients on a proposé de multiplier le nombre de cannelures. Le volant est habituellement calé angulairement sur l'arbre de la colonne de direction par quarante cannelures l'incertitude de position du volant est alors de 9°.

Dans certains cas, pour rétablir l'orientation théorique idéale du volant, on triche quelque peu sur le réglage du train avant du véhicule en agissant sur les biellettes de direction ; si ceci peut satisfaire les soucis d'esthétique cela ne va pas sans nuire à la précision de la conduite et sans produire une usure dissymétrique des pneumatiques.

Afin d'obtenir une orientation précise et rigoureuse du volant qui soit meilleure que la valeur que l'on vient d'indiquer, on a proposé diverses solutions permettant un réglage fin du calage de l'orientation angulaire relative du volant sur l'arbre de la colonne de direction.

Parmi celles-ci on relèvera par exemple les suivantes.

Le brevet français 2 557 992 décrit un dispositif de ce genre. Ce dispositif comprend, essentiellement, une bague ou douille ayant sur sa surface interne des moyens d'accouplement avec un arbre de colonne de direction et sur sa surface externe des moyens d'accouplement avec un moyeu de volant. Cette bague ou douille est susceptible d'être déplacée en translation axiale à l'aide d'un élément de commande et l'un au moins des moyens d'accouplement est agencé pour provoquer, outre une translation axiale de la bague, un déplacement angulaire du moyeu et donc du volant.

Le brevet français 2 592 925 propose un autre dispositif de ce genre. Ce dispositif comprend une douille intermédiaire interposée entre l'arbre et le moyeu. Cette douille est associée à l'arbre à l'aide de cannelures de manière à être mobile en translation axiale. Cette douille est aussi associée au moyeu à l'aide d'un filetage de manière à être mobile notamment en rotation par rapport à ce dernier. En agissant sur la position relative angulaire du moyeu et de cette douille que l'on bloque ensuite sur l'arbre par un assemblage conique, on peut obtenir un réglage fin de l'orientation du volant.

Le brevet français 2 594 086 décrit un autre dispositif de ce type mais d'une structure beaucoup plus complexe. Il fait aussi appel à une douille intermédiaire entre arbre et moyeu et utilise un moyeu dédoublé. On se sert d'un système de coins qui sont mobiles axialement et relativement les uns aux autres pour agir sur des crans de tailles réglables disposés sur la face frontale du moyeu et de la douille afin de parvenir au réglage fin de l'orientation du volant.

Le document DE-A-34 00 609 illustre un autre état de la technique. Le dispositif divulgué par ce document comprend les éléments qui sont répertoriés dans le préambule de la revendication principale.

Tous ces dispositifs, s'ils permettent d'obtenir un réglage fin, présentent tous le même inconvénient notamment en raison de leur structure relativement complexe qui en augmente d'autant les coûts de fabrication, d'assemblage et de montage voire d'entretien.

Le but de l'invention est donc de résoudre le problème précédemment indiqué en proposant un dispositif de réglage qui ne présente pas les inconvénients
que l'on vient d'évoquer et qui soit simple, fiable tout
en permettant de faire rapidement et facilement le
réglage désiré et qui soit d'un coût relativement modique tout en étant d'une grande sécurité.

L'invention a pour objet un dispositif pour le
réglage fin du calage de l'orientation angulaire relative d'un arbre de colonne de direction et d'un volant
d'automobile du type indiqué dans le préambule de la
revendication principale. Les particularités de ce dispositif ressortent notamment de la partie caractérisante de cette revendication et des revendications qui
lui sont rattachées.

D'autres caractéristiques de l'invention ressortiront de la lecture de la description et des revendications qui suivent et de l'examen du dessin annexé,
donné seulement à titre d'exemple, où :
　　– La Fig.1 est une perspective éclatée schématique d'un mode de réalisation du dispositif selon
l'invention ;
　　– La Fig.2 est une coupe méridienne longitudinale du dispositif de la Fig.1 représenté assemblé ;
　　– Les Fig.3A et 3B sont des représentations partielles d'un autre mode de réalisation de l'invention en coupe axiale partielle et en vue de dessus,
respectivement ; et
　　– Les Fig.4A et 4B sont des vues analogues à celles des Fig.3A et 3B d'un mode de réalisation différent de l'invention.

Les colonnes de direction de véhicule automobile
étant bien connues et, en particulier, la partie de celle-ci qui se trouve dans l'habitacle où est placé le
volant, on ne décrira dans la suite que ce qui se rapporte à l'invention. Pour le surplus le spécialiste puisera dans les solutions courantes à sa disposition
pour faire face aux problèmes particuliers auxquels il
est confronté.

Dans la suite on utilise un même numéro de référence pour désigner un composant homologue.

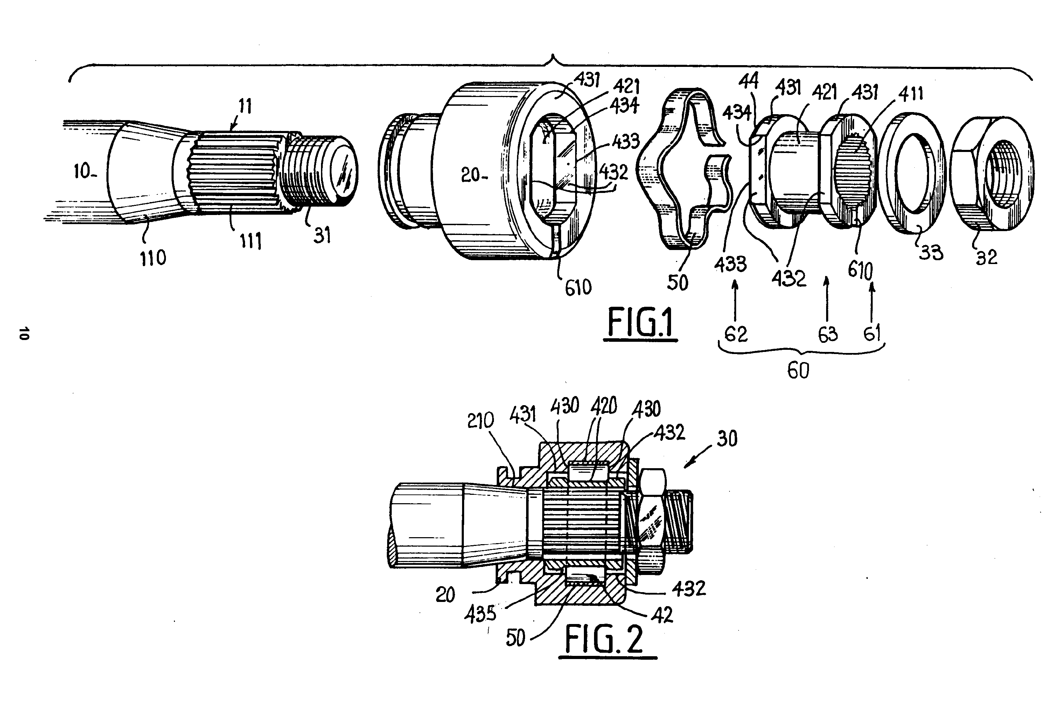

Comme on le voit sur les Fig. 1 et 2 du dessin, une
colonne de direction comprend un arbre 10 terminé,
du côté de l'habitacle, par un embout 11.

A cet arbre est associé un volant dont seul le
moyeu 20 est représenté.

Pour transmettre les couples que le conducteur
développe sur le volant, le moyeu 20 est associé à
l'arbre 10 à l'aide d'un assemblage conique, comme
il est classique. Cet assemblage conique compend
une portée conique mâle 110 sur l'embout 11 et une
portée conique femelle 210 dans le moyeu 20,
complémentaire.

Pour assurer le calage angulaire grossier du
volant sur l'arbre on utilise une liaison à encastrement faite, généralement, de cannelures axiales telles que
les cannelures 111 portées par la surface extérieure
de l'embout 11 et des cannelures complémentaires
associées directement ou indirectement au moyeu et
sur lesquelles on reviendra par la suite. Lorsqu'on utilise quarante cannelures périphériques, comme il est
d'usage, on peut donc obtenir une orientation réglable
par pas de 9°.

Ce moyeu et cet arbre sont réunis l'un à l'autre
grâce à des moyens de fixation 30. Ces moyens de
fixation comprennent, par exemple une partie filetée
31, à la manière d'une vis, sur l'embout 11 et un écrou
32 auquel est associée une rondelle 33.

Au lieu d'utiliser une telle solution, on peut faire
en sorte que l'embout 11 soit muni d'un alésage axial
taraudé dans lequel une vis vient s'assujettir.

Comme cela apparaît clairement sur la Fig.2, ce
dispositif comprend aussi une douille 40 qui est interposée entre le moyeu 20 et l'embout 11. La surface
intérieure de cette douille présente des cannelures
rectilignes 411 axiales, complémentaires de celles
extérieures 111 de la liaison à encastrement dont on
a parlé précédemment.

Comme on l'observe, en particulier en examinant
la coupe axiale de la Fig.2, cette douille 40 et ce
moyeu 20 délimitent entre eux une chambre annulaire
42 qui présente des parois cylindriques 420 et des
parois en couronne 430. L'une au moins de ces parois
en couronne 430 est définie par des rebords 431
concentriques de la douille et du moyeu, qui se font
face. Ces rebords présentent chacun au moins un
méplat 432 ; ces méplats sont destinés à être placés
en regard l'un de l'autre avec un jeu radial autorisant
une rotation relative, progressive et continue, limitée,
d'un angle 8 maximal donné, entre douille et moyeu.
La valeur de cet angle θ est de 1 ordre de 8° à 9° environ. En effet, comme illustré clairement, la corde 433
du méplat du moyeu est plus courte que celle du
méplat de la douille ; ceci peut s'observer sur le dessin. Ces méplats 432 se terminent par des arêtes 434
axiales.

Comme illustré, chacun des rebords présente de
préférence, deux méplats diamétralement opposés.

Dans la chambre 42 est logé un organe de friction
50 pour développer un couple de frottement entre
douille 40 et moyeu 20 s'opposant à leur rotation relative spontanée lorsque le dispositif selon l'invention
est assemblé comme illustré sur la Fig.2 mais ses
moyens de fixation non encore serrés de manière
que l'assemblage conique n'exerce pas encore son
action normale.

Dans le mode de réalisation représenté sur les
Fig. 1 et 2, cet organe de friction 50 est constitué
d'une lame de ressort, par exemple métallique, ondulée et cintrée comme illustré.

Pour le mode de réalisation représenté toutes les
parois en couronne sont munies de rebords 431 qui,
tous, portent deux méplats 432 diamétralement opposés. Dans un tel mode de réalisation, les parois cylindriques 420 de la chambre annulaire sont constituées par le fond de gorges 421 ménagées à la fois sur le moyeu 20 et sur la douille 40.

Ces rebords 431 peuvent être de mêmes diamètres ou de diamètres différents, le plus petit étant alors celui qui est destiné à être le plus proche de l'assemblage conique.

Il est clair que la douille peut aussi présenter un corps cylindrique complètement lisse et ne posséder qu'un rebord 431 unique situé à son extrémité ou face destinée à être opposée à l'assemblage conique.

De préférence, la tranche de l'extrémité de la douille 40 qui est dirigée vers l'assemblage conique est munie d'un chanfrein 44. Ce chanfrein facilite l'introduction de la douille dans le moyeu une fois l'organe de friction placé dans la chambre. Si besoin est l'introduction est faite à la presse.

S'il y a lieu, la tranche de la paroi en couronne qui est proche de l'assemblage conique est, elle, munie d'un biseau 435 sur lequel on reviendra par la suite.

Comme on le voit au moins deux crans 610 sont ménagés l'un sur le moyeu 20 et l'autre sur la douille 40 sur leurs faces respectives, qui sont opposées à l'assemblage conique.

Le dispositif selon l'invention, dont la Fig.1 illustre un mode de réalisation, est préalablement assemblé comme il apparaît de la Fig.2. Puis le dispositif ainsi assemblé, le moyeu du volant équipé de sa douille et de son organe de friction est placé sur l'embout de l'arbre de la colonne direction. L'engagement des cannelures de la douille entre les cannelures correspondantes complémentaires de l'embout permet d'assurer l'orientation grossière du volant par rapport à l'arbre. La précision de ce calage est fonction du pas des cannelures, comme déjà indiqué.

Pour opérer le réglage fin continu et progressif dont l'amplitude résulte du jeu ménagé entre les cordes des méplats de la douille et du moyeu qui se font face, on introduit un tournevis ou analogue dans les crans 610 et l'on fait tourner relativement l'un à l'autre le moyeu et la douille à l'encontre du frottement relativement énergique développé par l'organe de friction 50. Ceci fait, l'orientation correcte finale recherchée et obtenue, il suffit alors de serrer l'écrou 32 pour assurer l'immobilisation définitive du moyeu sur l'arbre grâce à l'assemblage conique, comme il est classique de le faire.

Le chanfrein 44 facilite l'opération d'assemblage et, plus particulièrement, l'introduction de la douille dans le moyeu muni de son organe de friction, comme déjà indiqué.

La douille étant ainsi placée dans le moyeu avec interposition de l'organe de friction, il est impossible de l'en ressortir lorsque celle-ci est munie d'une gorge, comme illustré, dont la tranche est orientée perpendiculairement à l'axe non référencé. L'ensemble est indémontable.

Si l'on souhaite pouvoir ressortir la douille du moyeu on donne un certain angle à cette tranche en y ménageant un biseau 435 comme illustré.

Une telle opération de dégagement de la douille du moyeu est par exemple nécessaire lorsqu'on souhaite changer le volant initial dont est équipée l'automobile pour le remplacer par un volant en cuir ou un volant de petit diamètre dit de sport.

Comme on le constate, outre le calage fin de l'orientation relative du moyeu par rapport à l'arbre qu'il permet, le dispositif suivant l'invention procure une grande sécurité.

En effet, si les moyens de fixation venaient à se desserrer ou à prendre du jeu et que l'assemblage conique jouait quelque peu, les deux méplats pourraient tourner l'un par rapport à l'autre jusqu'à ce que leurs arêtes 434 d'extrémité viennent en contact de butée. Il en résulterait un décalage qui nuirait à l'esthétique et à l'agrément de conduite du fait que les branches du volant n'auraient plus leur orientation initiale mais en aucun cas la transmission du couple serait interrompue.

En outre le cran 610 peut contribuer, aussi, à faciliter l'orientation du moyeu lors de la fabrication du volant et, ultérieurement à rendre plus commode et rapide la pose du volant équipé du dispositif selon l'invention sur l'arbre de la colonne de direction

De la description qui précède faite à propos d'un mode de réalisation particulier on voit clairement que le dispositif selon l'invention comprend un agencement 60 de réglage fin, progressif et continu, fait d'un mécanisme de commande 61 pour vaincre le couple de frottement développé par l'organe de friction 50 ; cet agencement est aussi fait de limiteurs 62 de l'amplitude de rotation relative fixant la valeur maximale de l'angle O autorisé et de butées 63 de sécurité. Ici, ce mécanisme 61 comprend les crans 610, ces limiteurs 62 comprenant les cordes 433 des méplats 432, et ces butées 63 comprennent les arêtes 434 des méplats 432.

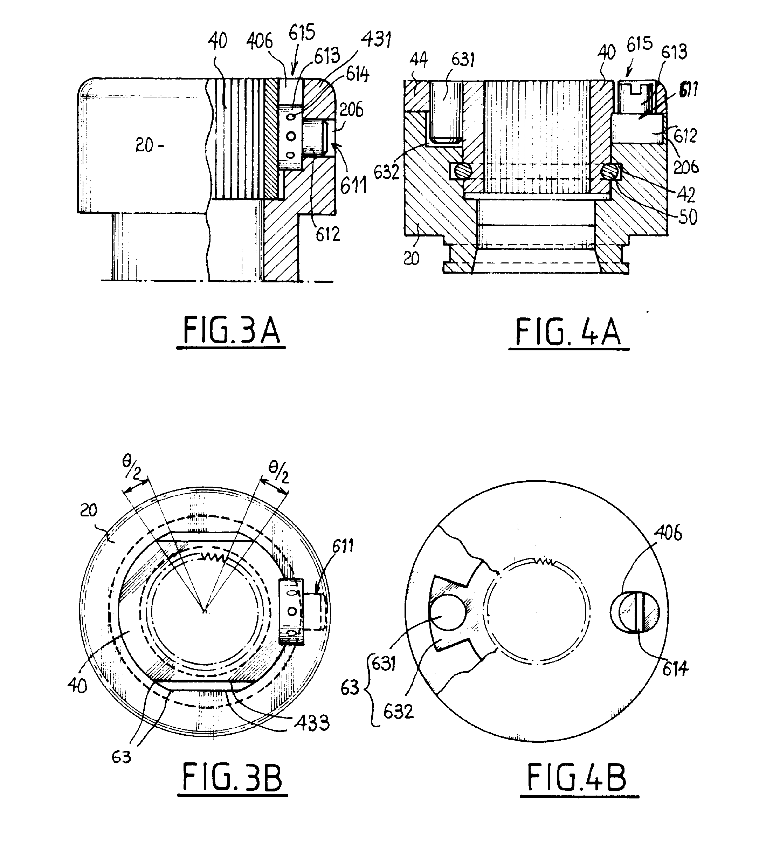

On se reportera maintenant au mode de réalisation illustré sur les Fig.3A et 3B.

Comme il apparaît, le moyeu 20 est percé d'un trou 206 cylindrique radial et la douille 40 est creusée à sa périphérie d'une boutonnière 406 en forme de rainure rectiligne axiale ouverte.

Un pion 611 à came est intercalé entre le moyeu et la douille. Ce pion 611 comprend une tige 612 et un disque 613, tous deux cylindriques et excentrés l'un par rapport à l'autre de manière à servir de came. La tige 612 est engagée dans le trou 206 où elle peut tourner et le disque est engagé pratiquement sans jeu dans la boutonnière 406 où il peut se déplacer.

La périphérie du disque 613 porte des alvéoles 614 régulièrement répartis, par exemple des canaux cylindriques et dans le(s) rebord(s) 431 est ménagé un regard 615 qui permet d'accéder aux alvéoles du disque du pion.

Dans ce mode de réalisation il n'y a pas de crans 610 et l'organe de friction 50 est celui des Fig. 1 et 2.

Pour l'assemblage, on engage la tige du pion dans le trou du moyeu, on met en place l'organe de friction et on enfile la douille dans le moyeu de manière que, d'une part les méplats et, d'autre part, le disque et la boutonnière soient en correspondance, respectivement.

Pour procéder au réglage fin continu et progressif de l'orientation du volant relativement à l'arbre, les moyens de fixation étant desserrés, on engage une broche au travers du regard et on l'insère dans un des alvéoles. On fait tourner progressivement le pion à l'aide de la broche. La tige tourillonne dans le trou du moyeu et le disque, relativement excentré servant alors de came, prend appui contre l'un des flancs de la boutonnière de la douille calée par ses cannelures sur l'arbre. On provoque ainsi une rotation relative de la douille et du moyeu.

Dans ce mode de réalisation, le mécanisme de commande 61 est formé du pion 611 avec sa tige 612 et son disque 613 avec ses alvéoles 614 accessibles par le regard 615, et des trous 205 et boutonnière 406. Le limiteur d'amplitude 62, est lui, constitué par la came résultant de l'excentricité relative donnée au disque et à la tige. Les butées 63 sont ici encore les arêtes des méplats. Ces butées ne servent qu'en cas de rupture du pion.

On examinera maintenant le mode de réalisation de l'invention représenté sur les Fig.4A et 4B.

En schématisant, on peut dire que le pion 611 a subi une rotation d'un quart de tour et, de radial qu'il était, il est devenu axial. Pour le reste, comme dessiné, l'organe de friction est maintenant un jonc élastique, et les butées 63 ont été modifiées, les méplats étant supprimés.

Comme on le voit, la douille 40 présente maintenant un épaulement 44 qui coiffe le moyeu, comme illustré.

Dans l'épaulement est creusée la boutonnière 406 qui est ici une rainure rectiligne radiale fermée. Le trou 206 cylindrique est fait dans la face terminale du moyeu et sert aussi de regard d'accès.

L'alvéole 614 est, ici, une fente de tourne-vis, comme illustré.

Pour butées 63 on se sert d'une protubérance 631 associé à la douille et d'un logement 632 pratiqué dans le moyeu. Comme le montre l'arrachement de la Fig.4B, la protubérance peut se déplacer dans le logement mais en cas de rupture du pion elle rencontre le bord du logement et interdit toute poursuite de rotation relative moyeu / douille.

Dans ce mode d'exécution la protubérance est une cheville rapportée enfichée dans l'épaulement de la douille ; il est clair que cette protubérance peut être d'un seul tenant avec la douille et venir de matière avec elle. De même, les dispositions relatives propres à la protubérance et au logement peuvent être inversées

Pour procéder à l'assemblage de ce mode de réalisation et pour opérer un réglage fin progressif et continu, on fait comme exposé à propos des Fig.3A et 3B.

On comprend donc tout l'intérêt et tout l'avantage du dispositif selon l'invention qui est d'une simplicité extrême puisqu'il ne comprend qu'une douille, un organe de friction et, éventuellement, un pion à came.

De plus, on observera que la géométrie des parties coopérantes est d'une très grande sobriété ce qui est favorable à un nombre d'opérations d'usinage réduit qui sont faciles à conduire à l'aide de machines-outils classiques.

**Revendications**

1. Dispositif pour le réglage fin progressif et continu du calage de l'orientation angulaire relative d'un arbre de colonne de direction et d'un volant d'automobile qui sont réunis par des moyens de fixation à vis et écrou, où cet arbre (10) comprend un embout (11) avec une portée conique mâle (110) d'un assemblage conique et des cannelures (111) rectilignes axiales extérieures d'une liaison à encastrement, où ce volant comprend un moyeu (20) avec une portée conique femelle (210) complémentaire de la portée conique mâle (110) de l'assemblage conique qu'elle est destinée à recevoir et où une douille (40) est interposée entre ce moyeu (20) et cet embout (11) d'arbre (10) qui sont mobiles relativement en rotation avant mise en oeuvre de ces moyens de fixation et présente des cannelures rectilignes (411) axiales intérieures complémentaires de celles extérieures (111) de la liaison à encastrement auxquelles elles sont destinées à s'imbriquer, et où cette douille (40) et ce moyeu (20) portent des limiteurs (62) de l'amplitude fixant la valeur de l'angle maximal (θ) de rotation relative autorisée et des butées (63) de sécurité de fin de course et qui est caractérisé en ce que cette douille (40) et ce moyeu (20) délimitent entre eux une chambre annulair (42), en ce qu'un organe de friction (50) est logé dans la chambre (42) pour développer un couple de frottement entre douille (40) et moyeu (20) s'opposant à leur rotation relative spontanée et en ce que cette douille (40) et ce moyeu (20) portent un agencement (60) pour déplacer celui-ci relativement à celle-là seulement en rotation qui comprend un mécanisme de commande (61) pour vaincre le couple de frottement développé par l'organe de friction.

2. Dispositif selon la revendication 1, caractérisé en ce que l'angle maximal donné (θ) est inférieur à 9° environ.

3. Dispositif selon l'une quelconque des revendications 1 ou 2, caractérisé en ce que la chambre (42) présente des parois approximativement cylindriques (420) et des parois en couronnes (430), en ce qu'au moins l'une de ces parois en couronnes (430) est définie par des rebords (431) concentriques de la douille (40) et du moyeu (20) qui se font face;

4. Dispositif selon l'une quelconque des revendications 1 à 3, caractérisé en ce que seules les parois en couronne (430) situées à l'opposé de l'assemblage conique sont munies de rebords (431).

5. Dispositif selon l'une quelconque des revendications 1 à 3, caractérisé en ce que les parois en couronnes (430) situées à proximité et à l'opposé de l'assemblage conique sont munies de rebords (431).

6. Dispositif selon la revendication 5, caractérisé en ce que les rebords (431) sont de dimensions différentes.

7. Dispositif selon l'une quelconque des revendications 3 à 6, caractérisé en ce que ces parois approximativement cylindriques (420) sont constituées par le fond d'une gorge (421).

8. Dispositif selon la revendication 7, caractérisé en ce que cette gorge (421) est ménagée dans le moyeu (20) et/ou la douille (40).

9. Dispositif selon l'une quelconque des revendications 1 à 8, caractérisé en ce que l'organe de friction (50) est un ressort ondulé radialement.

10. Dispositif selon l'une quelconque des revendications 1 à 8, caractérisé en ce que l'organe de friction (50) est un jonc élastique.

11. Dispositif selon l'une quelconque des revendications 1 à 10, caractérisé en ce que la périphérie de l'une au moins des extrémités de la douille (40) porte un chanfrein (44), de préférence celle à diriger vers l'assemblage conique.

12. Dispositif selon l'une quelconque des revendications 3 à 8, caractérisé en ce que l'une des parois en couronne (430) porte un biseau (435), de préférence celle à placer proche de l'assemblage conique.

13. Dispositif selon l'une quelconque des revendications 3 à 12, caractérisé en ce que l'agencement (60) comprend des limiteurs (62) constitués d'au moins deux méplats (432) qui sont ménagés l'un sur le rebord (431) de la douille (40) et l'autre sur le rebord (431) du moyeu (20), qui sont placés en vis-à-vis et dont les cordes (433) sont de longueurs différentes, celle du méplat du moyeu étant plus courte que celle du méplat du moyeu, et comprend des butées (63) constituées par les arêtes (434) axiales de ces méplats (432).

14. Dispositif selon la revendication 13, caractérisé en ce que chacun des rebords (431) présente deux méplats (432) diamétralement opposés.

15. Dispositif selon la revendication 13 ou 14, caractérisé en ce que l'agencement (60) comprend un mécanisme de commande (61) fait d'au moins deux crans (610) ménagés l'un sur la douille (40) et l'autre sur le moyeu (20) sur leurs faces respectives qui sont opposées à l'assemblage conique.

16. Dispositif selon l'une quelconque des revendications 13 ou 14, caractérisé en ce que l'agencement (60) comprend un mécanisme de commande (61) et des limiteurs (62) faits d'un pion à came (611) avec une tige (612) et un disque (613) où la tige (612) est engagée dans un trou (206) cylindrique du moyeu (20) et le disque (613) est engagé dans une boutonnière (406) de la douille (40).

17. Dispositif selon la revendication 16, caractérisé en ce que le trou (206) est radial, la boutonnière (406) est une rainure rectiligne axiale ouverte périphérique, en ce qu'un regard (615) est ménagé dans la douille (40) et/ou le moyeu (20) sur leurs faces respectives qui sont opposées à l'assemblage conique et en ce que le disque (613) présente au moins un alvéole (614) périphérique auquel on peut accéder par ce regard (615).

18. Dispositif selon l'une quelconque des revendications 13, 14, 16, caractérisé en ce que la douille (40) est munie d'un épaulement (44) qui coiffe la face du moyeu (20) opposée à l'assemblage conique, en ce que le trou (206) est axial, en ce que la boutonnière (406) est radiale et ménagée au travers de cet épaulement (44).

19. Dispositif selon la revendication 18, caractérisé en ce que les butées sont faites d'une protubérance (631) associée à l'épaulement (44) et tournée vers le moyeu (20) et d'un logement (632) dans la face du moyeu (20) opposée à l'assemblage conique et d'une taille autorisant la réception de cette protubérance (631) tout en limitant sa rotation à la valuer de l'angle maximal (θ).

## Patentansprüche

1. Vorrichtung zur schrittweisen und stufenlosen Feineinstellung der Orientierung eines Lenkrades zu einer Lenksäule eines Kraftfahrzeugs, die durch eine Befestigungsvorrichtung aus Schraube und Mutter miteinander verbunden sind, wobei diese Säule (10) über ein Ansatzstück (11) mit konischem Außengewinde (110) einer konischen Verbindung sowie über äußere, axial verlaufende, gerade Rillen (111) einer Einspannverbindung verfügt und dieses Lenkrad über eine Nabe (20) mit konischem Innengewinde (210) entsprechend dem Außengewinde (110) der konischen Verbindung verfügt, die sie aufnehmen soll, und wobei ein Ring (40) zwischen dieser Nabe (20) und dem Ansatzstück (11) der Säule (10) sitzt, die vor dem Einbau dieser Befestigungsvorrichtung zueinander drehbar sind, der innen über axial und gerade verlaufende, zu den äußeren Rillen (111) der Einspannverbindung passende Rillen (411) verfügt, in die sie greifen sollen, und wobei dieser Ring (40) und diese Nabe (20) über Begrenzungen (62) verfügen, die den Wert des maximalen Winkels (θ) der entsprechenden Drehung bestimmten, sowie über Sicherheitsstopper (63) für die Endstellung, und dadurch gekennzeichnet, daß dieser Ring (40) und diese Nabe (20) zusammen eine ringförmige Kammer (42) bilden, und daß eine Reibungsvorrichtung (50) in der Kammer (42) sitzt, die ein Reibungsmoment zwischen Nabe (20) und Ring (40) erzeugt und ihre natürliche Drehung zueinander begrenzen soll, sowie dadurch, daß dieser Ring (40) und diese Nabe (20) über eine Vorrichtung (60) verfügen, damit sich die Nabe gegenüber dem Ring nur drehend bewegen kann, die über einen Antriebsmechanismus (61) verfügt, der das durch die Reibungseinrichtung entwickelte Reibungsmoment überwinden soll.

2. Vorrichtung gemäß Anspruch 1, dadurch gekennzeichnet, daß der gegebene Maximalwinkel ($\theta$) unter etwa 9° liegt.

3. Vorrichtung gemäß einem der Ansprüche 1 oder 2, dadurch gekennzeichnet, daß die Kammer (42) annährend zylindrische Wände (420) und Anschlußflächen (430) aufweist, dadurch, daß mindestens eine dieser Anschlußflächen (430) von konzentrischen Randleisten (431) der Nabe (2) und des Rings (40) begrenzt wird, die sich gegenüberliegen.

4. Vorrichtung gemäß einem der Ansprüche 1 bis 3, dadurch gekennzeichnet, daß nur die Anschlußflächen (430), die gegenüber der konischen Verbindung liegen, mit Randleisten (431) ausgestattet sind.

5. Vorrichtung gemäß einem der Ansprüche 1 bis 3, dadurch gekennzeichnet, daß die an und gegenüber der konischen Verbindung liegenden Anschlußflächen (430) mit Randleisten versehen sind.

6. Vorrichtung gemäß Anspruch 5, dadurch gekennzeichnet, daß die Randleisten (431) unterschiedliche Abmessungen haben.

7. Vorrichtung gemäß einem der Ansprüche 3 bis 6, dadurch gekennzeichnet, daß diese annährend zylindrischen Wände (420) durch den Boden einer Nut (421) gebildet werden.

8. Vorrichtung gemäß Anspruch 7, dadurch gekennzeichnet, daß diese Nut (421) in dem Ring (40) und/oder der Nabe (20) vorgesehen ist.

9. Vorrichtung gemäß einem der Ansprüche 1 bis 8, dadurch gekennzeichnet, daß die Reibungsvorrichtung (50) aus einer radial gewellten Feder besteht.

10. Vorrichtung gemäß einem der Ansprüche 1 bis 8, dadurch gekennzeichnet, daß die Reibungsvorrichtung (50) aus einem Federring besteht.

11. Vorrichtung gemäß einem der Ansprüche 1 bis 10, dadurch gekennzeichnet, daß der Umfang mindestens eines der Enden des Rings (40) mit einer Abschrägung (44) versehen ist, vorzugsweise das Ende, das auf die konische Verbindung gerichtet wird.

12. Vorrichtung gemäß einem der Ansprüche 3 bis 8, dadurch gekennzeichnet, daß eine der Anschlußflächen (430) mit einem Keil (435) versehen ist, vorzugsweise diejenige, die an die konische Verbindung anschließen soll.

13. Vorrichtung gemäß einem der Ansprüche 3 bis 12, dadurch gekennzeichnet, daß die Vorrichtung (60) über Begrenzer (62) aus mindestens zwei Abflachungen (432) verfügt, von denen eine an der Randleiste (431) des Rings (40) und die andere an der Randleiste (431) der Nabe (20) vorgesehen ist, die sich gegenüberliegen und deren Seitenflächen (433) unterschiedlich lang sind, wobei die der Abflachung der Nabe kürzer als die der Abflachung des Rings ist und über Anschläge (63) verfügt, die durch die Axialkanten (434) dieser Abflachungen gebildet werden.

14. Vorrichtung gemäß Anspruch 13, dadurch gekennzeichnet, daß jede der Randleisten (431) zwei Abflachungen (432) aufweist, die einander diametral gegenüberliegen.

15. Vorrichtung gemäß Anspruch 13 oder 14, dadurch gekennzeichnet, daß die Vorrichtung (60) über einen Antriebsmechanismus (61) verfügt, der aus mindestens zwei Auskerbungen (610), einer am Ring (40) und einer an der Nabe (20) an ihren jeweiligen Seiten, besteht, die der konischen Verbindung gegenüberliegen.

16. Vorrichtung gemäß einem der Ansprüche 13 oder 14, dadurch gekennzeichnet, daß die Vorrichtung (60) über einen Antriebsmechanismus (61) und Begrenzungen (62) verfügt, die aus einem Bolzen mit Nocke (611) mit einer Stange (612) und einer Scheibe (613) bestehen, wobei die Stange (612) in eine zylindrische Öffnung (206) der Nabe geführt wird und die Scheibe (613) in eine längliche Aussparung (406) des Rings (40).

17. Vorrichtung gemäß Anspruch 16, dadurch gekennzeichnet, daß die Öffnung (206) radial verläuft, die längliche Aussparung (206) eine gerade, offene, axiale, umlaufende Nut ist, daß ein Schlitz (615) im Ring (40) und/oder in der Nabe (20) an deren jeweiligen Seiten vorgesehen ist, die der konischen Verbindung gegenüberliegen, sowie dadurch, daß die Scheibe (613) über mindestens ein Sackloch (614) verfügt, das durch den Schlitz (615) zugänglich ist.

18. Vorrichtung gemäß einem der Ansprüche 13, 14, 16, dadurch gekennzeichnet, daß der Ring (40) mit einem Vorsprung (44) versehen ist, der die Seite der Nabe (20) bedeckt, die der konischen Verbindung gegenüberliegt, daß die Öffnung (206) axial verläuft, daß die längliche Aussparung (406) radial verläuft und quer über diesen Vorsprung (44) verläuft.

19. Vorrichtung gemäß Anspruch 18, dadurch gekennzeichnet, daß die Anschläge aus einer mit dem Vorsprung verbundenen und zur Nabe (20) gerichteten Ausstülpung (631) und einem Freiraum (632) in der der konischen Verbindung gegenüberliegenden Seite der Nabe (20) ausgestattet ist und die entsprechende Größe für die Aufnahme dieser Ausstülpung (631) aufweist, gleichzeitig ihre Drehung auf den Wert des maximalen Winkels ($\theta$) beschränkt.

## Claims

1. Device for the progressive, continuous fine adjustment of the setting of the relative angular orientation setting of a steering-column shaft and a steering wheel in a motor vehicle, which are connected by screw and nut fastening means, wherein this shaft (10) comprises an end (11) provided with a male conical bearing surface (110) of a conical assembly and with external rectilinear axial splines (111) of an interengaging connection system, wherein this steering wheel comprises a hub (20) having a female conical bearing surface (210) complementary to the male conical bearing surface (110) of the conical assembly which it is intended to receive, and wherein a sleeve (40) is interposed between the hub (20) and this end (11) of the shaft (10) which are relatively mobile in rotation before these securing means are made operative and has internal rectilinear axial splines (411) complementary to the external splines (111) of the interengaging connection system with which they are intended to imbricate, and wherein this sleeve (40) and this hub (20) support amplitude limiters (62) defining the maximum permitted value of the angle ($\theta$) of relative rotation and safety stops at the end of the travel, and which is characterised in that this sleeve (40) and this hub (20) define an annular chamber (42) between them, in that a friction member (50) is received in the chamber (42) to develop a frictional couple between the sleeve (40) and the hub (20) opposing their spontaneous relative rotation, and in that this sleeve (40) and this hub (20) support an arrangement (60) to displace the latter relative to the former only in respect of rotation, which arrangement comprises a control mechanism (61) to overcome the frictional torque developed by the friction member.

2. Device according to Claim 1, characterised in that the given maximum angle ($\theta$) is less than approximately 9°.

3. Device according to either of Claims 1 or 2, characterised in that the chamber (42) has approximately cylindrical walls (420) and rim walls (430), and in that at least one of these rim walls (430) is defined by concentric flanges (431) of the sleeve (40) and the hub (20), which face one another.

4. Device according to any one of Claims 1 to 3, characterised in that the rim walls (430) disposed opposite the conical assembly are provided with flanges (431).

5. Device according to any one of Claims 1 to 3, characterised in that the rim walls (430) disposed close to and opposite the conical assembly are provided with flanges (431).

6. Device according to Claim 5, characterised in that the flanges (431) are of different dimensions.

7. Device according to anyone of Claims 3 to 6, characterised in that the said approximately cylindrical walls (420) are formed by the bottom of a groove (421).

8. Device according to Claim 7, characterised in that this groove (421) is formed in the hub (20) and/or the sleeve (40).

9. Device according to any one of Claims 1 to 8, characterised in that the friction member (50) is a radially corrugated spring.

10. Device according to any one of Claims 1 to 8, characterised in that the friction member (50) is an elastic ring.

11. Device according to any one of Claims 1 to 10, characterised in that the periphery of at least one of the ends of the sleeve (40), preferably the end which is to be directed towards the conical assembly, is chamfered (44).

12. Device according to any one of Claims 3 to 8, characterised in that one of the rim walls (430), preferably the wall which is to be disposed close to the conical assembly, is bevelled (432).

13. Device according to any one of Claims 3 to 12, characterised in that the arrangement (60) comprises limiting devices (62) consisting of at least two flats (432) which are provided in one case on the flange (431) of the sleeve (40), and in the other case on the flange (431) of the hub (20), and which are placed facing one another and the chords (433) of which are of different lengths, the chord of the flat of the hub being shorter than that of the flat of the sleeve, and which comprises abutment stops (63) constituted by the axial chords (434) of these flats (432).

14. Device according to Claim 13, characterised in that each of the flanges (431) has two diametrically opposite flats (432).

15. Device according to Claim 13 or 14, characterised in that the layout (60) comprises a control mechanism (61) consisting of at least two notches (610), one provided on the sleeve (40) and the other on the hub (20), on the respective surfaces thereof that are opposite the conical assembly.

16. Device according to either one of Claims 13 or 14, characterised in that the layout (60) comprises a control mechanism (61) and limiting devices (62) comprised of a cam stud (611) having a rod (612) and a disc (613), wherein the rod (612) is engaged in a cylindrical hole (206) in the hub (20) and the disc (613) is engaged in an oblong opening (406) in the sleeve (40).

17. Device according to Claim 16, characterised in that the hole (206) is radial, and the oblong opening (406) is an open peripheral rectilinear axial groove, in that a window (615) is provided in the sleeve (40) and/or in the hub (20), on the respective surfaces thereof which are opposite the conical assembly, and in that the disc (613) has at least one peripheral socket (614), which may be accessed via this window (615).

18. Device according to any one of Claims 13, 14 or 16, characterised in that the sleeve (40) is provided with a shoulder (44) capping the face of the hub (20) opposite the conical assembly, in that the hole (206) is axial, and in that the oblong opening (406) is radial and is provided through this shoulder (44).

19. Device according to Claim 18, characterised in that the abutment stops are comprised of a protuberance (631) associated with the shoulder (44) and turned towards the hub (20) and of a recess (632) in the surface of the hub (20) opposite the conical assembly and of a size enabling this protuberance (631) to be received while restricting the rotation thereof to the value of the maximum angle ($\theta$).

FIG.1

FIG.2

EP 0 320 333 B1

FIG.3A

FIG.4A

FIG.3B

FIG.4B